# EUROPEAN PATENT SPECIFICATION

(11) **EP 2 374 216 B1**
(45) Date of publication and mention of the grant of the patent: **10.04.2013**
(21) Application number: 08875428.8
(22) Date of filing: 09.12.2008
(51) Int. Cl.: H04B 7/00

(54) **COMPENSATION TECHNIQUES FOR RECEIVE SIGNALS IN DIFFERENT CLOCK DOMAINS**
KOMPENSATIONSTECHNIKEN FÜR EMPFANGSSIGNALE IN VERSCHIEDENEN TAKTDOMÄNEN
TECHNIQUES DE COMPENSATION POUR SIGNAUX DE RÉCEPTION DANS DIFFÉRENTS DOMAINES D'HORLOGE

(43) Date of publication of application: 12.10.2011
(73) Proprietor: Telefonaktiebolaget L M Ericsson (PUBL), 164 83 Stockholm (SE)
(72) Inventor: HERBIG, Gerhard Peter, 71570 Oppenweiler (DE); GEBAUER, Thomas, 71573 Allmersbach Im Tal (DE)
(74) Representative: Tonscheidt, Andreas
(86) International application number: PCT/EP2008/067119
(87) International publication number: WO 2010/066286

(56) References cited:
- LANKL B ET AL: "Fully digital ATDE's and XPIC's for a STM-1 cochannel radio system family" 19890611; 19890611 - 19890614, 11 June 1989 (1989-06-11), pages 1013-1019, XP010081214
- LANKL B ET AL: "CROSS-POLARIZATION INTERFERENCE CANCELLATION IN THE PRESENCE OF DELAY EFFECTS" DIGITAL TECHNOLOGY - SPANNING THE UNIVERSE. PHILADELPHIA, JUNE 12 - 15, 1988; [INTERNATIONAL CONFERENCE ON COMMUNICATIONS], NEW YORK, IEEE, US, vol. VOL. 3 OF 3, no. 1988, 12 June 1988 (1988-06-12), pages 1355-1361, XP000042186

## Description

### Technical Field

The present invention relates to compensation techniques for receive signals in different clock domains.

### Background

It is known to provide receivers which operate on the basis of two orthogonally polarized signals. In such receivers, problems may arise due to cross-polarization interference, i.e. due to signal portions of one polarization being coupled to the other polarization and vice versa. One approach to deal with cross-polarization interference is the use of cross-polarization interference cancellation (XPIC) techniques. For example, a receiver for one polarization may be equipped with an XPIC filter which receives a compensation signal from a receiver for the other polarization. By adaptation of the XPIC filter, a filtered compensation signal may be generated which then can be combined with a receive signal so as to reduce or suppress signal portions due to cross-polarization interference.

The compensation signal may be extracted from the receive signal of the receiver for the other polarization after analog-to-digital conversion of the receive signal, i.e. as a digital signal. Alternatively, the compensation signal may be extracted before analog-to-digital conversion of the receive signal, i.e. as an analog signal.

However, in some cases the receivers for the different polarizations may receive signals from different sources and with different bit rates. Further the receivers for the different polarizations may be located in different clock domains. In such cases, exchanging a digital compensation signal between the receivers on the basis of synchronous symbol-by-symbol sampling is not possible.

Further, it is known to provide diversity receivers which have multiple receive branches, e.g. a main branch and a diversity branch. A diversity receiver may operate on the basis of different polarizations of radio waves and include adaptive XPIC filters so as to allow for reducing cross polarization crosstalk. In this respect, it is known to extract the compensation signal either at the main branch or at the diversity branch. Further, it may be possible to switch between these alternatives. However, such procedures may fall, if the channel of the selected branch is affected by deep fading. In this case, no compensation signal is available and the transmission quality will significantly degrade. Switching over to the other branch in such a case is typically accompanied by bit errors and therefore provides no satisfying solution for avoiding a degradation of transmission quality.

B. Lankl et al.: "Fully digital ATDE's and XPIC's for a STM-1 cochannel radio system family" 19890611; 19890611 - 19890614, 11 June 1989 (1989-06-11), pages 1013-1019, XP010081214, describes that the new STM-1 signal format can advantageously be carried by high capacity digital radio systems by making use of cochannel operation. This can be implemented in an economical way be fully exploiting the capabilities of silicon VLSI technology. A fully digital adaptive transversal filter IC was developed which can be used not only in the time domain equalizer but also in a crosspolarization interference canceller. This offers a very economical solution for a cochannel system providing twice the channel capacity. Due to synchronization of carriers and timing of both orthogonal polarized signals the baudspaced transversal filter structure of the VLSIC enables superior performance both for the equalizer and for the canceller operation.

Accordingly, there is a need for improved techniques for transferring a compensation signal in a multi-branch receiver equipment.

### Summary

A method of receiving data and a receiver equipment according to the independent claims are provided.

According to an embodiment of the invention, a method of receiving data is provided. The method comprises receiving a receive signal in a first clock domain. The receive signal has a first digital symbol timing and is sampled on the basis of the first digital symbol timing, Further, the method comprises receiving a digital compensation signal from a second clock domain. The digital compensation signal has a second digital symbol timing. According to the method, the digital compensation signal is resampled on the basis of the first digital symbol timing, and the sampled receive signal is combined with the resampled digital compensation signal.

According to a further embodiment of the invention, a receiver equipment is provided. The receiver equipment comprises a receive branch for receiving a receive signal. The receive branch operates in a first clock domain. The receive signal has a first digital symbol timing. The receiver equipment further comprises a sampling stage for sampling the receive signal on the basis of the first digital symbol timing. The receiver equipment is also provided with a compensation branch operating on the basis of a digital compensation signal received from a second clock domain. The compensation branch comprises a resampling device for resampling the digital compensation signal on the basis of the first digital symbol timing; and a combiner for combining the sampled first receive signal with the resampled digital compensation signal.

### Brief description of the drawings

Fig. 1 schematically illustrates a receiver equipment according to an embodiment of the invention.
Fig. 2 schematically illustrates a part of a receive branch according to an embodiment of the invention, the receive branch being provided with a resampling device which receives a compensation signal from another clock domain.
Fig. 3 schematically illustrates a resampling device according to an embodiment of the invention.
Fig. 4 schematically illustrates a hold generator of the resampling device.
Fig. 5 schematically illustrates a timing recovery unit of the resampling device.

### Detailed description of embodiments

In the following, the invention will be explained in more detail by referring to exemplary embodiments relating to devices and methods for receiving data signals, which are based on transferring a digital compensation signal between different receive branches or receivers.

According to some of the concepts explained below, a first receive signal is received in a first clock domain. The first receive signal has a first digital symbol timing, e.g. a corresponding clock signal and a corresponding hold signal indicating valid data symbols. The first receive signal is sampled on the basis of the first digital symbol timing. A first digital compensation signal is received in the first clock domain from a second clock domain. The first digital compensation signal has a second digital symbol timing, e.g. a corresponding clock signal and a corresponding hold signal indicating valid data symbols. In the first clock domain, the received first compensation signal is resampled on the basis of the first digital symbol timing. The sampled first receive signal is then combined with the resampled first digital compensation signal. The combination may be accomplished using an adaptive filter receiving the resampled first digital compensation signal, e.g. an XPIC filter, and a summing node.

Further, a second receive signal may be received in the second clock domain. The second receive signal thus has the second digital symbol timing, and the second receive signal is sampled on the basis of the second digital symbol timing. A second digital compensation signal may be received in the second clock domain from the first clock domain. The second digital compensation signal may then be resampled on the basis of the second digital symbol timing, and the sampled second receive signal may be combined with the resampled second digital compensation signal. Again, the combination may be accomplished using an adaptive filter receiving the resampled second digital compensation signal, e.g. an XPIC filter, and a summing node.

Accordingly, the digital compensation signals may be used as inputs into cross-coupling interference cancellation devices, such as XPIC filters or the like.

The process of resampling the digital compensation signals may comprise buffering the digital compensation signal on the basis of an external clock signal received from the other clock domain and outputting the buffered digital compensation signal on the basis of a local clock signal. This may be accomplished in a FIFO buffer or other type of buffer.

The process of resampling of the digital compensation signals may also comprise receiving an external hold signal indicating positions of valid data symbols in the second digital compensation signal. The digital compensation signal may then be input into the buffer on the basis of the external clock signal when the external hold signal indicates a valid data symbol in the digital compensation signal.

Further, the process of resampling of the digital compensation signals may comprise generating an intermediate hold signal on the basis of the external hold signal, the local clock signal, and the external clock signal, the intermediate hold signal indicating when a data symbol is to be retrieved from the buffer. The process of outputting the buffered digital compensation signal from the buffer may then comprise outputting a data symbol on the basis of the local clock signal when the intermediate hold signal indicates that a data symbol is to be retrieved from the buffer.

Further, the process of resampling the digital compensation signal may comprise receiving a local hold signal indicating positions of valid data symbols in the sampled receive signal of the same clock domain. The buffered digital compensation signal may then be interpolated on the basis of the local clock signal, the intermediate hold signal, and the local hold signal.

The digital compensation signal received from the other clock domain may be extracted from the sampled receive signal of the other clock domain. If there are multiple receive branches in the other clock domain, this may also involve combining receive signals from different receive branches to form the digital compensation signal.

Accordingly, the concepts as described herein may involve resampling of a signal, which is used as an input signal of an XPIC filter or other type of interference canceller, e.g. in a radio diversity receiver. A special digital interface for the compensation signal may be provided, which is configured to transfer the compensation signal from one clock domain to another clock domain. The transferred signal may then be resampled on the basis of another digital symbol timing. The resampling process may be realized using asynchronous sampled signals.

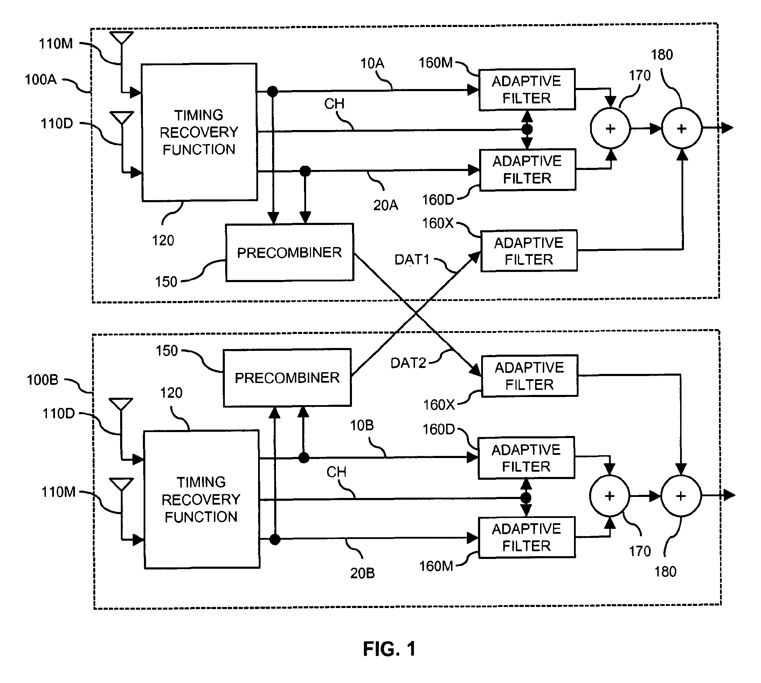

Fig. 1 schematically illustrates a receiver equipment with two diversity-based receive branches 100A, 100B. The receive branches may correspond to different polarizations of a transmission signal, e.g. a horizontal and a vertical polarization or different circular polarizations. The receive branches 100A, 100B may be implemented in different hardware units, i.e. may also be implemented as separate receivers.

In the structure of Fig. 1, each receive branch 100A, 100B is provided with two subbranches, a main branch having an antenna 110M and an adaptive filter 160M and a diversity branch having an antenna 110D and an adaptive filter 160D. That is to say, each receive branch 100A, 100B corresponds to a diversity radio receiver. The adaptive filters 160M, 160D in the first receive branch 100A are used for combining the receive signals 10A and 20A, and the adaptive filters in the second receive branch 100B are used for combining the receive signals 10B and 20B. The adaptive filters 160M, 160D are configured as digital baseband filters, i.e. are supplied with a digitized version of the respective receive signal. This concept has the advantage of allowing for fully-automatic feeder length compensation.

Further, each of the receive branches 100A, 100B comprises a compensation branch with an adaptive filter 160X and a summing node 180. The compensation branch has the purpose of reducing or eliminating cross-coupling interference signals from the other receive branch. In the illustrated example, which assumes that the receive branches 100A, 100B operate on different polarizations, the compensation branch may also be referred to as XPIC branch, and the adaptive filter 160X may be referred to as XPIC filter. The input signal of the XPIC filter is a compensation signal DAT1, DAT2 received from the other receive branch 100A, 100B. Similar to the adaptive filters 160M, 160D, the XPIC filter is configured as a digital baseband filter, i.e. the compensation signals DAT1, DAT2 are digital.

In each receive branch 100A, 100B, the output signals of the adaptive filters 160M, 160D are combined at a summing node 170, and the output signal of the summing node 170 is combined with the output signal of the XPIC filter 160X in the summing node 180. Accordingly, the adaptive filters 160M, 160D and the summing node 170 form a diversity combiner for combining the digitally sampled receive signals 10A, 20A or 10B, 20B of the subbranches within one of the receive branches 100A, 100B, and the XPIC filter 160X and the summing node 180 form a compensation combiner for combining the digital compensation signal DAT1, DAT2 received from the other receive branch 100A, 100B with the combined receive signals 10A, 20A or 10B, 20B.

The digital receive signals 10A, 20A are provided by a common timing recovery function 120 of the first receive branch 100A, and the digital receive signals 10B, 20B are provided by a common timing recovery function 120 of the second receive branch 100B. The common timing recovery functions 120 thus accomplish sampling of analog input receive signals received from the antennas 110M, 110D and analog-to-digital conversion of the receive signals 10A, 20A, 10B, 20B and may also be regarded as sampling stages. The timing recovery functions 120 are also configured to accomplish delay equalization of the antenna feeders. Further, the timing recovery functions 120 each generate a common hold signal CH indicating valid data symbols in the respective receive signals 10A, 20A or 10B, 20B. The timing recovery functions 120 output the digital receive signals 10A, 20A or 10B, 20B on the basis of a local clock signal (not illustrated in Fig. 1) in the respective receive branch 100A, 100B, with a frequency corresponding to the doubled symbol rate of the receive signals 10A, 20A or 10B, 20B. The processing in the timing recovery functions 120 may actually involve asynchronously sampling the analog input receive signals with a rate which is slightly higher than the doubled symbol rate and decimating the sampled signal to the doubled symbol rate. The local clock signal in the first receive branch 100A may be different from the local clock signal in the second receive branch 100B. The common hold signals CH are generated so as to suit the local clock in the respective receive branch 100A, 100B.

Each of the adaptive filters 160M, 160D, 160 X is configured as a digital baseband filter operating on an input signal with two samples per data symbol and provides a decimated output signal with only one sample per data symbol.

In each of the receive branches 100A, 100B, for generating the compensation signal DAT1, DAT2 supplied to the XPIC filter 160X of the other receive branch 100A, 100B, the receive signals of the main branch and the diversity branch are combined, and the combined signal is used as the compensation signal DAT1, DAT2. This is accomplished by a precombiner 150. In this way, the compensation signal DAT1, DAT2 can be generated with two samples per symbol of the receive signals 10A, 20A, 10B, 20B. As compared to that, a signal extracted from the output of the summing node 170, which together with the adaptive filters 160M, 160D forms a primary diversity combiner, has only one sample per symbol. Accordingly, the output of the primary combiner is not suitable to be directly used as input to the XPIC filters 160X, which require two samples per symbol in their input signal.

The precombiner 150 may be realized using a maximum ratio combining algorithm, which guarantees a valid signal as long as at least one of the two input signals of the precombiner 150 is valid. In this way, the structure of the precombiner 150 is kept simple and the additional outlay for implementing the precombiner 150 is small.

In the structure of Fig. 1, the input signals of the precombiner 150 are extracted between the digital timing recovery function 120, which accomplish delay equalization of the antenna feeders, and the corresponding adaptive filter 160M, 160D of a subbranch. In this way, delay-equalized signals, which can be directly combined, are supplied to the precombiner 150. Extracting the input signals of the precombiner 150 before the adaptive filters 160M, 160D is desirable since the compensation signal DAT1, DAT2 is then generated with two samples per symbol and has a suitable sampling rate to be used as input signal of the XPIC filter 160X of the other receive branch. However, it is to be understood that some implementations may also use an XPIC filter which is operating on an input signal with one sample per symbol, e.g. in the case of a symbol space equalizer.

The two receive branches 100A are located in a certain hardware environment, but may belong to different hardware units. Accordingly, a first requirement for the XPIC interface, i.e. the interface allowing for exchanging the compensation signal DAT1, DAT2 between the two receive branches, is to allow that the outgoing compensation signal DAT1, DAT2 and the incoming compensation signal DAT1, DAT2 of one receive branch 100A, 100B belong to different clock domains, e.g. different physical clock-nets having separate clock sources.

As mentioned above, the timing recovery functions 120 in each of the two receive branches 100A, 100B provide the receive signals 10A, 20A or 10B, 20B with two samples per data symbol. Further, the timing recovery functions 120 also provide appropriate hold signals CH indicating valid symbols in the corresponding receive signals 10A, 20A or 10B, 20B.

Because the symbol rate of the transmit signals received by the first receive branch 100A may differ from the symbol rate of the transmit signal received by the second receive branch 100B, a second requirement for the XPIC interface is to allow that the outgoing and incoming compensation signals DAT1, DAT2 may correspond to different symbol rates.

In view of the above, each receive branch 100A, 100B may be provided with a resampling device, which interpolates and samples the incoming compensation signal DAT1, DAT2 and transfers the incoming compensation signal DAT1, DAT2 into a different clock domain. The resampling device may also be referred to as a resampling filter.

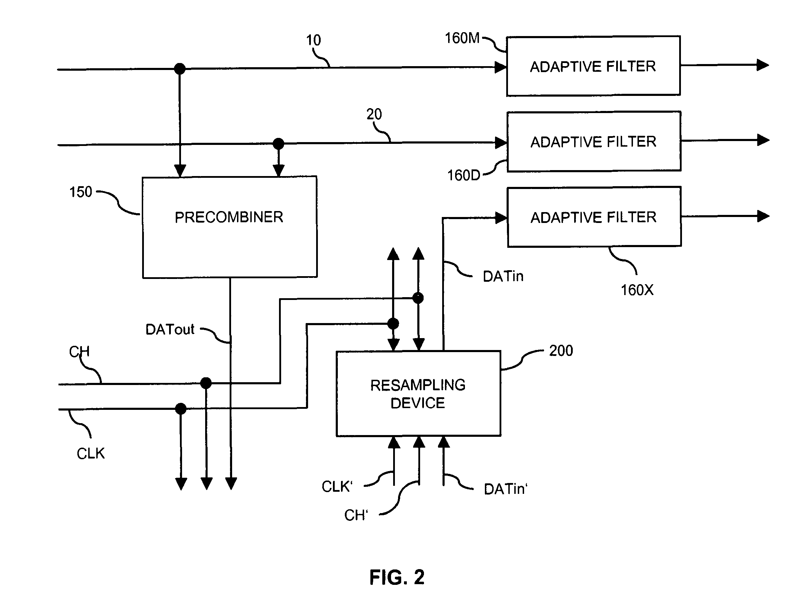

Referring to Figs. 2-5, an exemplary implementation of the resampling device 200 will be explained. The resampling device 200 may be used in the receive branches 100A, 100B of Fig. 1. However, it is to be understood that the resampling device 200 could also be used in other applications which require exchange of a digital signal between different clock domains. The resampling device 200 is based on an asynchronous sampling concept, which allows for an efficient hardware implementation. In other implementations, synchronous sampling concepts may be used. In the asynchronous sampling concept, the physical clock frequency is slightly higher than necessary, and not every clock edge indicates a new valid symbol. The sequence of valid symbols in the data stream is indicated by a hold signal, e.g. the common hold signal CH as provided by the timing recovery functions 120 of Fig. 1.

Fig. 2 schematically illustrates a portion of a receive branch with a digital main receive signal 10 and a digital diversity receive signal 20, e.g. as the receive signals 10A, 20A or 10B or 20B in the receive branches 100A, 100B of Fig. 1. Components of Fig. 2 which correspond to those of Fig. 1 have been designated with the same or similar reference signs, and further information can be obtained from their explanation in connection with Fig. 1. As illustrated, the receive branch includes adaptive filters 160M, 160D and an XPIC filter 160X. It is assumed that the two receive signals 10, 20 belong to the same clock domain and are based the same hold sequence, i.e. a common hold signal CH. Furthermore, a delay compensation of the main and diversity receive signals 10, 20 is assumed to be already done in the receive signals 10, 20. Fig. 1 shows how the receive signals 10, 20 can be combined using a precombiner 150 to generate the outgoing compensation signal DATout for another receive branch.

An incoming compensation signal DATin', which is based on an external clock signal CLK' and an external hold signal CH', is received in the receive branch via a the resampling device 200. The resampling device 200 accomplishes an adaptation of the incoming compensation signal DATin' to a local clock signal CLK and to a local hold signal CH of the receive branch.

After adaptation to the local clock signal CLK and to the local hold signal CH, the adapted compensation signal DATin is in conformity with the local sample timings and is forwarded to the XPIC filter 160X.

It is to be understood that each of the receive branches 100A, 100B of Fig. 1 may be provided with the structure as illustrated in Fig. 2, thereby allowing for a symmetric exchange of compensation signals.

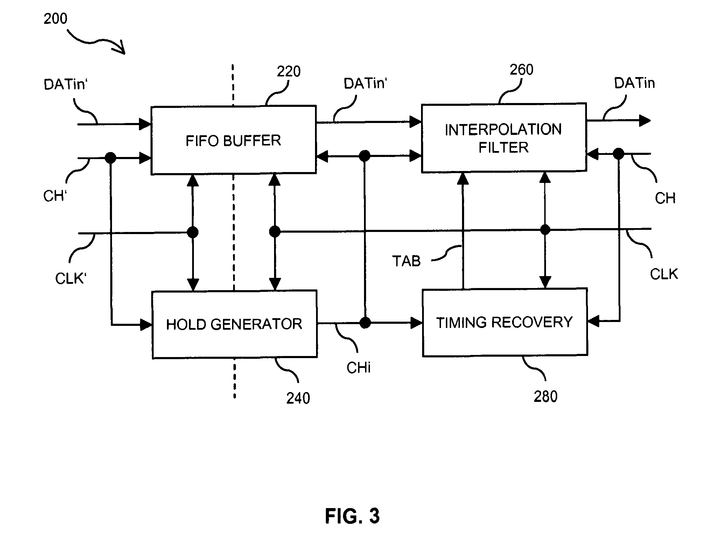

An implementation of the resampling device 200 is illustrated in Fig. 3. In this implementation, the resampling device 200 comprises a FIFO ("First In/First Out") buffer 220, a hold generator 240, an interpolation filter 260, and a timing recovery unit 280.

As shown in Fig. 3, the resampling device 200 has an external port with three signals CLK', CH', DATin' and an internal port with three signals CLK, CH, DATin.

At the external port, data is supplied via the incoming compensation signal DATin', which more generally may also be referred to as incoming data signal. The data is accompanied by the external clock signal CLK' and, due to the asynchronous nature of the data, by the external hold-signal CH'.

At the internal port, the data is output by the adapted incoming compensation signal DATin, which may also be referred to as adapted incoming data signal. Further, the local clock signal CLK and the local hold signal CH are supplied as input signals to the resampling device at the internal port.

The local clock signal CLK and the local hold signal CH can be considered as reference signals to which the incoming data signal DATin' is synchronized.

The FIFO buffer 220 receives a data symbol at a clock edge of the external clock signal CLK', if the external hold signal CH' indicates a valid data symbol. The FIFO buffer 220 outputs a data symbol at a clock edge of the local clock signal CLK, if a further hold signal CHi indicates that a data symbol is to be retrieved. This further hold signal CHi is generated by the hold generator 240 and is also referred to as an intermediate hold signal.

The hold generator 240 is configured to assure that, on average, the hold signals CH', CHi, indicate the same amount of valid data symbols, irrespective of the different clock signals CLK', CLK used for operating the input and output of the FIFO buffer 220.

Accordingly, in a first stage of the resampling device 200, the valid data symbols of the incoming data signal DATin' are regenerated on the basis of the local clock signal. Otherwise, the incoming data signal DATin' is not changed.

The interpolation filter 260 computes intermediate values from the incoming data signal DATin' as supplied from the FIFO buffer 220. The intermediate values are computed on the basis of a timing phase signal TAB provided by the timing recovery unit 280. The intermediate values are output from the interpolation filter 260 in the adapted incoming data signal DATin. This is accomplished on the basis of the local hold signal CH and the local clock signal CLK, i.e. a data symbol in the adapted incoming data signal DATin is output on a clock edge of the local clock signal CLK if the local hold signal CH indicates a valid data symbol.

The rates of valid data symbols at the input and at the output of the interpolation filter 260 are different and are given by the intermediate hold signal CHi (at the input) and the local hold signal CH (at the output). The intermediate hold signal CHi and the local hold signal CH are supplied as input signals to the timing recovery unit 280. As a further input signal, the timing recovery unit 280 receives the local clock signal CLK.

Accordingly, the timing recovery unit 280 generates the timing phase signal TAB on the basis of the intermediate hold signal CHi, the local hold signal CH, and the local clock signal CLK.

The timing recovery unit 280 receives the two hold signals CHi, CH and uses these signals as a basis for generating the timing phase signal TAB for the interpolation filter 220. No strict requirements are imposed on the timing recovery unit 280 concerning its wander characteristics if the adapted incoming data signal DATin is supplied to a filter capable of adaptive delay compensation, such as the XPIC filters as of Figs. 1 and 2. Delays in the order of one symbol duration can then be compensated automatically without any performance degradation.

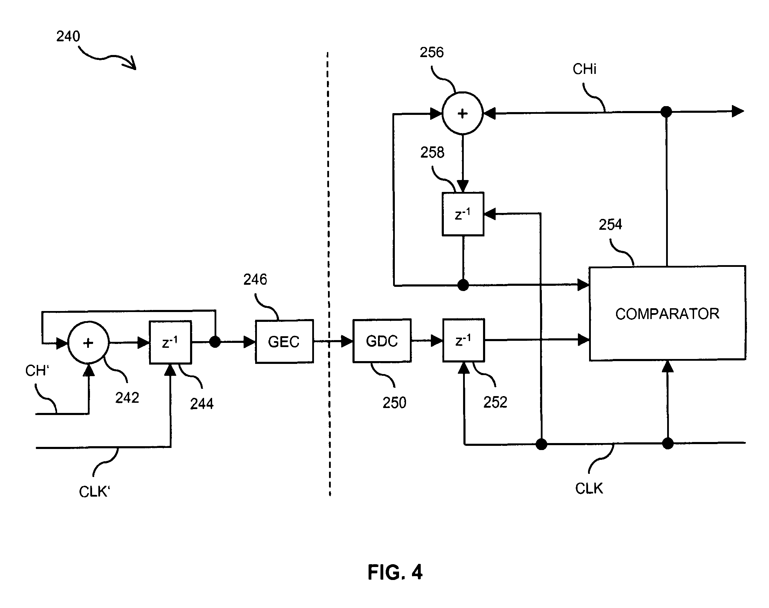

Fig. 4 is a functional diagram schematically illustrating the hold generator 240. As illustrated, the hold generator 240, may include a first modulo counter implemented by a summing node 242 and a data register 244, a second modulo counter implemented by a summing node 256 and a data register 258, a gray-level encoder (GEC) 246, a gray-level decoder (GDC) 250, a further data register 252, and a comparator 254.

In Fig. 4, a vertical dashed line schematically illustrates a border between different clock domains. Components shown on the left side of the vertical dashed line belong to a clock domain of the external clock signal CLK', and components shown on the right side of the vertical dashed line belong to a clock domain of the local clock signal CLK.

In the first modulo counter, the summing node 242 receives the external hold signal CH' at a first input. The data register 242, which is operated on the basis of the external clock signal CLK', receives the output signal of the summing node 242, and a feedback signal is supplied from the output of the data register 244 to a second input of the summing node 242.

The first modulo counter counts the amount of valid data symbols indicated by the external hold signal CH'. The output of the first modulo counter is supplied to the clock domain of the local clock signal CLK using a gray-level encoding/gray-level decoding (GEC/GDC) interface, provided by the gray-level encoder 246, which is located in the clock domain of the external clock signal CLK', followed by the gray-level decoder 250, which is located in the clock domain of the local clock signal CLK. In this way, errors in the counted value which may occur at the interface between the different clock domains are limited to +/-1.

The output of the first modulo counter is received in the clock domain of the local clock signal CLK via the GEC/GDC interface and is supplied to the data register 252, which is operated on the basis of the local clock signal CLK. The output signal of the data register 252, is supplied to a first input of the comparator 254. An output signal of the second modulo counter is supplied to a second input of the comparator 254. On the basis of a comparison between the signal supplied to its first input and the signal supplied to its second input, the comparator 254 generates the intermediate hold signal CHi.

In the second modulo counter, the summing node 256 receives the intermediate hold signal CHi at a first input. The data register 258, which is operated on the basis of the local clock signal CLK, receives the output signal of the summing node 256, and a feedback signal is supplied from the output of the data register 258 to a second input of the summing node 256. The second modulo counter counts the amount of valid data symbols indicated by the intermediate hold signal CHi.

Accordingly, the intermediate hold signal CHi is generated on the basis of a comparison between the output signal of the first modulo counter, i.e. the amount of valid data symbols indicated by the external hold signal CH, and the output signal of the second modulo counter, i.e. the amount of valid data symbols indicated by the intermediate hold signal CHi.

The comparator 254 generates the intermediate hold signal CHi in such a way that, on average, the number of valid data symbols indicated by the intermediate hold signal CHi is the same as the number of valid data symbols indicated by the external hold signal CH'. For example, if the first modulo counter outputs a larger value than the second modulo counter, the comparator 254 will generate the intermediate hold signal CHi with a hold value, i.e. a value indicating a valid data symbol. This may be referred to as "pushing" a hold value. Otherwise the intermediate hold signal will be generated without a hold value, which may be referred to as "dropping" a hold value.

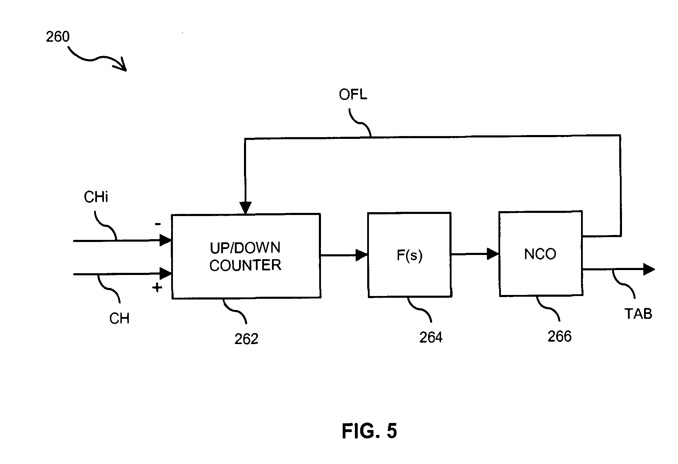

Fig. 5 is a functional diagram schematically illustrating the timing recovery unit 280. As illustrated, the timing recovery unit 280 comprises an up/down counter 262, a loop filter 264, and a number controlled oscillator (NCO) 266.

The local hold signal CH is supplied to a positive first input of the up/down counter 262, and the intermediate hold signal CHi is supplied to a negative second input of the up/down counter 262. Since the local hold signal CH and the intermediate hold signal CHi belong to the same clock domain, i.e. to the clock domain of the local clock signal CLK, they can be compared directly in the up/down counter 262. According to the hold signals CH, CHi, the up/down counter will be incremented or decremented. That is to say, the up/down counter 262 will be incremented by the local hold signal indicating a valid data symbol, and the up/down counter 262 will be decremented by the intermediate hold signal CHi indicating a valid data symbol. An output signal of the up/down counter 262 thus corresponds to a rate difference between the local hold signal CH and the intermediate hold signal CHi.

The output signal of the up/down counter is supplied to the loop filter 264, which has a filter function F(s). The filtered output signal of the loop filter 264 is supplied to the number-controlled oscillator 266. In response to its input signal, the number-controlled oscillator 266 produces the timing phase signal TAB, and an overflow signal OFL which is supplied back to the up/down counter 262 as a feedback signal, thereby forming a closed control loop.

The timing phase signal TAB delivered by the number-controlled oscillator 266 is a sequence of timing phases with a constant phase increment from sample to sample. The timing phase signal TAB is used as an input signal of the interpolation filter 260 (Fig. 3). The timing phases indicate time positions at which the interpolated value is to be computed by the interpolation filter 260.

The overflow signal OFL is generated at each zero-phase crossing of the timing phase signal TAB and is supplied to a third input for the up/down counter 262. The sign of the overflow signal OFL, i.e. whether it is used to increment or to decrement the up/down counter, depends on the direction of the zero-phase crossing.

If the rate of valid symbols indicated by the local hold signal CH is different from the rate of valid symbols indicated by the intermediate hold signal CHi, the overflow signal OFL eventually indicates the difference of the rates of the two input hold signals CH, CHi. In the steady-state case, the output of the up/down counter 262 vanishes and the output of the loop filter 264, which is the input of the number-controlled oscillator 266, becomes constant.

Accordingly, the resampling device as explained in connection with Figs. 2-5 allows for efficiently transferring a digital data signal, e.g. a digital compensation signal, between different clock domains having different digital symbol timings.

It is to be understood that the above concepts and examples are merely illustrative and are susceptible to various modifications. For example, the described compensation concepts are not limited to cross-coupling between different polarizations, but may be used to handle various types of cross-coupling interference between different communication channels. For example, the channels may correspond to different frequency bands or to different signal lines. Further, the concepts may be used to handle cross-coupling interference between non-diversity receivers with only a single receive branch. In the latter case, the precombiner could be omitted. Even in the case of diversity-based receive branches implementations without a precombiner are possible. Also, it is to be understood that cross-coupling interference cancellation could be implemented with a compensation signal being transmitted only from one receive branch to the other, but not vice versa.

Moreover, it is to be understood that the resampling device as described above could also be used in other applications than for transferring compensation signals between different receivers or receive branches. At the external port of the resampling device, the incoming data signal, the external clock signal, and the external hold signal need not be provided via parallel signal channels. For example, at least some of these signals could be transmitted via a single serial channel. Similarly, the outgoing compensation or data signal, the outgoing clock signal, and the outgoing hold signal could be transferred using multiple parallel channels and/or a serial channel carrying at least two of these signals.

## Claims

1. A method of receiving data, comprising:
receiving a first receive signal (10A, 20A) in a first dock domain, the first receive signal having a first digital symbol timing;
sampling the first receive signal (10A, 20A) on the basis of said first digital symbol timing;
receiving a first digital compensation signal (DAT1) from a second clock domain, the first digital compensation signal (DAT1) having a second digital symbol timing;
resampling the first compensation signal (DAT1) on the basis of said first digital symbol timing, wherein said resampling of the first compensation signal (DAT1) comprises:
buffering the first digital compensation signal (DAT1) on the basis of a first external clock signal (CLK') received from the second clock domain;
receiving a first external hold signal (CH') from the second clock domain, the first external hold signal (CH') indicating positions of valid data symbols in the first digital compensation signal (DAT2). wherein said buffering of the first digital compensation signal (DAT1) is accomplished when the first external hold signal (CH') indicates a valid data symbol in the first digital compensation signal (DAT1);
outputting the buffered first digital compensation signal (DAT1) on the basis of a first local clock signal (CLK) of the first clock domain,
and combining the sampled first receive signal (10A, 20A) with the resampled first digital compensation signal (DAT1).

2. The method according to claim 1,
wherein said resampling of the first digital compensation signal (DAT1) further comprises generating a first Intermediate hold signal (CHI) on the basis of the first external hold signal (CH'), the first local clock signal (CLK), and the first external clock signal (CLK'), the first intermediate hold signal (CHi) indicating when a data symbol is to be output in the buffered first digital compensation signal (DAT1), and wherein said outputting of the buffered first digital compensation signal (DAT1) comprises outputting a data symbol on the basis of the first local clock signal (CLK) when the first intermediate hold signal (CHi) indicates that a data symbol is to be output.

3. The method according to claim 2,
wherein said resampling of the first digital compensation signal (DAT1) further comprises:
receiving a first local hold signal (CH) indicating positions of valid data symbols in the sampled first receive signal (10A, 20A); and
interpolating the buffered first digital compensation signal (DAT1) on the basis of the first local clock signal (CLK), the first intermediate hold signal (CHi), and the first local hold signal (CH).

4. The method according to any one of the preceding claims, comprising:
receiving a second receive signal (10B, 20B) in the second clock domain, the second receive signal having said second digital symbol timing;
sampling the second receive signal (10B, 20B) on the basis of said second digital symbol timing;
receiving a second digital compensation signal (DAT2) from the first clock domain;
resampling the second digital compensation signal (DAT2) on the basis of said second digital symbol timing; and
combining the sampled second receive signal (10B, 20B) with the resampled second digital compensation signal (DAT2).

5. The method according to claim 4,
wherein said resampling of the second digital compensation signal (DAT2) comprises:
buffering the second digital compensation signal (DAT2) on the basis of a second external clock signal (CLK') received from the first clock domain;
outputting the buffered second digital compensation signal (DAT2) on the basis of a second local clock signal (CLK) of the second clock domain.

6. The method according to claim 5,
wherein said resampling of the second digital compensation signal (DAT2) further comprises receiving a second external hold signal (CH') indicating positions of valid data symbols in the second digital compensation signal (DAT2), and
wherein said buffering of the second digital compensation signal (DAT2) is accomplished when the second external hold signal (CH') indicates a valid data symbol in the second digital compensation signal (DAT2).

7. The method according to claim 6,
wherein said resampling of the second digital compensation signal (DAT2) further comprises generating a second intermediate hold signal (CHi) on the basis of the second external hold signal (CH'), the second local clock signal (CLK), and the second external clock signal (CLK'), the second intermediate hold signal (CHi) indicating when a data symbol is to be output in the buffered second digital compensation signal (DAT2), and
wherein said outputting of the buffered second digital compensation signal (DAT2) comprises outputting a data symbol on the basis of the second local clock signal (CLK) when the second intermediate hold signal (CHi) indicates that a data symbol is to be output.

8. The method according to claim 7,
wherein said resampling of the second digital compensation signal (DAT2) further comprises:
receiving a second local hold signal (CH) indicating positions of valid data symbols in the sampled second receive signal (10B, 20B); and
interpolating the buffered second digital compensation signal (DAT2) on the basis of the second local clock signal (CLK), the second intermediate hold signal (CHi), and the second local hold signal (CH).

9. A receiver equipment, comprising:
a first receive branch (100A) for receiving a first receive signal in a first clock domain, the first receive signal having a first digital symbol timing;
a first sampling stage (120) for sampling the first receive signal on the basis of the first digital symbol timing; and
a first compensation branch (160X, 180, 200) operating on the basis of a first digital compensation signal (DAT1) received from a second clock domain, the first digital compensation signal (DAT1) having a second digital symbol timing;
wherein the compensation branch (160X, 180, 200) comprises a first resampling device (200) for resampling the first digital compensation signal (DAT1) on the basis of the first digital symbol timing, wherein said first resampling device (200) further comprises for said resampling of the first compensation signal (DAT1):
means (220) for buffering the first digital compensation signal (DAT1) on the basis of a first external clock signal (CLK') received from the second clock domain;
wherein the means (220) are adapted to receive a first external hold signal (CH') from the second clock domain, the first external hold signal (CH') indicating positions of valid data symbols in the first digital compensation signal (DAT1);
wherein the means (220) are adapted to accomplish said buffering of the first digital compensation signal (DAT1) when the first external hold signal (CH') indicates a valid data symbol in the first digital compensation signal (DAT1);
and
wherein the means (220) are adapted to output the buffered first digital compensation signal (DAT1) on the basis of a first local clock signal (CLK) of the first clock domain; and
a first combiner (180) for combining the sampled first receive signal (10A, 20A) with the resampled first digital compensation signal (DAT1).

10. The receiver equipment according to claim 9,
wherein the first resampling device (200) is configured to operate on the basis of both the first digital symbol timing and the second digital symbol timing.

11. The receiver equipment according to claim 9 or 10, comprising:
a second receive branch (100B) for receiving a second receive signal (10B, 20B) in the second clock domain, the second receive signal (10B, 20B) having said second digital symbol timing; and
a second compensation branch (160X, 180, 200) operating on the basis of a second digital compensation signal (DAT2) received from the first clock domain, the second digital compensation signal (DAT2) having said first digital symbol timing;
wherein the second compensation branch (160X, 180, 200) comprises a second resampling device (200) for resampling the second digital compensation signal (DAT2) on the basis of said second digital symbol timing, and a second combiner (180) for combining the sampled second receive signal (10B, 20B) with the resampled second digital compensation signal (DAT2).

12. The receiver equipment according to claim 11,
wherein the second resampling device (200) is configured to operate on the basis of both the first digital symbol timing and the second digital symbol timing.

13. The receiver equipment according to any one of claims 9 to 12,
wherein the receiver equipment comprises means configured to perform the method according to any one of claims 2 to 8.

## Patentansprüche

1. Verfahren zum Empfangen von Daten, umfassend:
Empfangen eines ersten Empfangssignals (10A, 20A) in einem ersten Taktbereich, wobei das erste Empfangssignal einen ersten digitalen Symboltakt aufweist;
Abtasten des ersten Empfangssignals (10A, 20A) auf der Basis des ersten digitalen Symboltakts;
Empfangen eines ersten digitalen Kompensationssignals (DAT1) aus einem zweiten Taktbereich, wobei das erste digitale Kompensationssignal (DAT1) einen zweiten digitalen Symboltakt aufweist;
Neuabtasten des ersten Kompensationssignals (DAT1) auf der Basis des ersten digitalen Symboltakts, wobei das Neuabtasten des ersten Kompensationssignals (DAT1) umfasst:
Puffern des ersten digitalen Kompensationssignals (DAT1) auf der Basis eines ersten externen Taktsignals (CLK'), das aus dem zweiten Taktbereich empfangen wird;
Empfangen eines ersten externen Haltesignals (CH') aus dem zweiten Taktbereich, wobei das erste Haltesignal (CH') Positionen von gültigen Datensymbolen im ersten digitalen Kompensationssignal (DAT1) anzeigt, wobei das Puffern des ersten digitalen Kompensationssignals (DAT1) durchgeführt wird, wenn das erste externe Haltesignal (CH') ein gültiges Datensymbol im ersten digitalen Kompensationssignal (DAT1) anzeigt;
Ausgeben des gepufferten ersten digitalen Kompensationssignals (DAT1) auf der Basis eines ersten lokalen Taktsignals (CLK) des ersten Taktbereichs,
und Verknüpfen des abgetasteten ersten Empfangssignals (10A, 20A) mit dem neu abgetasteten ersten digitalen Kompensationssignal (DAT1).

2. Verfahren nach Anspruch 1,
wobei das Neuabtasten des ersten digitalen Kompensationssignals (DAT1) ferner Erzeugen eines ersten Zwischenhaltesignals (CHi) auf der Basis des ersten externen Haltesignals (CH'), des ersten lokalen Taktsignals (CLK) und des ersten externen Taktsignals (CLK') umfasst, wobei das erste Zwischenhaltesignal (CHi) anzeigt, wann ein Datensymbol im gepufferten ersten digitalen Kompensationssignal (DAT1) ausgegeben werden soll, und
wobei das Ausgeben des gepufferten ersten digitalen Kompensationssignals (DAT1) Ausgeben eines Datensymbols auf der Basis des ersten lokalen Taktsignals (CLK) umfasst, wenn das erste Zwischenhaltesignal (CHi) anzeigt, dass ein Datensymbol ausgegeben werden soll.

3. Verfahren nach Anspruch 2,
wobei das Neuabtasten des ersten digitalen Kompensationssignals (DAT1) ferner umfasst:
Empfangen eines ersten lokalen Haltesignals (CH), das Positionen von gültigen Datensymbolen im abgetasteten ersten Empfangssignal (10A, 20A) anzeigt; und Interpolieren des gepufferten ersten digitalen Kompensationssignals (DAT1) auf der Basis des ersten lokalen Taktsignals (CLK), des ersten Zwischenhaltesignals (CHi) und des ersten lokalen Haltesignals (CH).

4. Verfahren nach einem der vorhergehenden Ansprüche, umfassend:
Empfangen eines zweiten Empfangssignals (10B, 20B) im zweiten Taktbereich, wobei das zweite Empfangssignal den zweiten digitalen Symboltakt aufweist;
Abtasten des zweiten Empfangssignals (10B, 20B) auf der Basis des zweiten digitalen Symboltakts;
Empfangen eines zweiten digitalen Kompensationssignals (DAT2) aus dem ersten Taktbereich;
Neuabtasten des zweiten digitalen Kompensationssignals (DAT2) auf der Basis des zweiten digitalen Symboltakts; und
Verknüpfen des abgetasteten zweiten Empfangssignals (10B, 20B) mit dem neu abgetasteten zweiten digitalen Kompensationssignal (DAT2).

5. Verfahren nach Anspruch 4,
wobei das Neuabtasten des zweiten digitalen Kompensationssignals (DAT2) umfasst:
Puffern des zweiten digitalen Kompensationssignals (DAT2) auf der Basis eines zweiten externen Taktsignals (CLK'), das aus dem ersten Taktbereich empfangen wird;
Ausgeben des gepufferten zweiten digitalen Kompensationssignals (DAT2) auf der Basis eines zweiten lokalen Taktsignals (CLK) des zweiten Taktbereichs.

6. Verfahren nach Anspruch 5,
wobei das Neuabtasten des zweiten digitalen Kompensationssignals (DAT2) ferner Empfangen eines zweiten externen Haltesignals (CH') umfasst, das Positionen von gültigen Datensymbolen im zweiten digitalen Kompensationssignal (DAT2) anzeigt, und
wobei das Puffern des zweiten digitalen Kompensationssignals (DAT2) durchgeführt wird, wenn das zweite externe Haltesignal (CH') ein gültiges Datensymbol im zweiten digitalen Kompensationssignal (DAT2) anzeigt.

7. Verfahren nach Anspruch 6,
wobei das Neuabtasten des zweiten digitalen Kompensationssignals (DAT2) ferner Erzeugen eines zweiten Zwischenhaltesignals (CHi) auf der Basis des zweiten externen Haltesignals (CH'), des zweiten lokalen Taktsignals (CLK) und des zweiten externen Taktsignals (CLK') umfasst, wobei das zweite Zwischenhaltesignal (CHi) anzeigt, wann ein Datensymbol im gepufferten zweiten digitalen Kompensationssignal (DAT2) ausgegeben werden soll, und
wobei das Ausgeben des gepufferten zweiten digitalen Kompensationssignals (DAT2) Ausgeben eines Datensymbols auf der Basis des zweiten lokalen Taktsignals (CLK) umfasst, wenn das zweite Zwischenhaltesignal (CHi) anzeigt, dass ein Datensymbol ausgegeben werden soll.

8. Verfahren nach Anspruch 7,
wobei das Neuabtasten des zweiten digitalen Kompensationssignals (DAT2) ferner umfasst:
Empfangen eines zweiten lokalen Haltesignals (CH), das Positionen von gültigen Datensymbolen im abgetasteten zweiten Empfangssignal (10B, 20B) anzeigt; und
Interpolieren des gepufferten zweiten digitalen Kompensationssignals (DAT2) auf der Basis des zweiten lokalen Taktsignals (CLK), des zweiten Zwischenhaltesignals (CHi) und des zweiten lokalen Haltesignals (CH).

9. Empfängereinrichtung, umfassend:
einen ersten Empfangszweig (100A) zum Empfangen eines ersten Empfangssignals in einem ersten Taktbereich,
wobei das erste Empfangssignal einen ersten digitalen Symboltakt aufweist;
eine erste Abtaststufe (120) zum Abtasten des ersten Empfangssignals auf der Basis des ersten digitalen Symboltakts; und
einen ersten Kompensationszweig (160X, 180, 200), der auf der Basis eines ersten digitalen Kompensationssignals (DAT1) arbeitet, das aus einem zweiten Taktbereich empfangen wird, wobei das erste digitale Kompensationssignal (DAT1) einen zweiten digitalen Symboltakt aufweist;
wobei der Kompensationszweig (160X, 180, 200) eine erste Neuabtastvorrichtung (200) zum Neuabtasten des ersten digitalen Kompensationssignals (DAT1) auf der Basis des ersten digitalen Symboltakts umfasst, wobei die erste Neuabtastvorrichtung (200) ferner für das Neuabtasten des ersten digitalen Kompensationssignals (DAT1) umfasst:
Mittel (220) zum Puffern des ersten digitalen Kompensationssignals (DAT1) auf der Basis eines ersten externen Taktsignals (CLK'), das aus dem zweiten Taktbereich empfangen wird;
wobei die Mittel (220) so ausgelegt sind, dass sie ein erstes externes Haltesignal (CH') aus dem zweiten Taktbereich empfangen, wobei das erste externe Haltesignal (CH') Positionen von gültigen Datensymbolen im ersten digitalen Kompensationssignals (DAT1) anzeigt;
wobei die Mittel (220) so ausgelegt sind, dass sie das Puffern des ersten digitalen Kompensationssignals (DAT1) durchführen, wenn das erste externe Haltesignal (CH') ein gültiges Datensymbol im ersten digitalen Kompensationssignal (DAT1) anzeigt; und
wobei die Mittel (220) so ausgelegt sind, dass sie das gepufferte erste digitale Kompensationssignal (DAT1) auf der Basis eines ersten lokalen Taktsignals (CLK) des ersten Taktbereichs ausgeben; und
einen ersten Verknüpfer (180) zum Verknüpfen des abgetasteten ersten Empfangssignals (10A, 20A) mit dem neu abgetasteten ersten digitalen Kompensationssignal (DAT1).

10. Empfängereinrichtung nach Anspruch 9,
wobei die erste Neuabtastvorrichtung (200) so konfiguriert ist, dass sie sowohl auf der Basis des ersten digitalen Symboltakts als auch des zweiten digitalen Symboltakts arbeitet.

11. Empfängereinrichtung nach Anspruch 9 oder 10, umfassend:
einen zweiten Empfangszweig (100B) zum Empfangen eines zweiten Empfangssignals (10B, 20B) im zweiten Taktbereich, wobei das zweite Empfangssignal (10B, 20B) den zweiten digitalen Symboltakt aufweist;
einen zweiten Kompensationszweig (160X, 180, 200), der auf der Basis eines zweiten digitalen Kompensationssignals (DAT2) arbeitet, das aus dem ersten Taktbereich empfangen wird, wobei das zweite digitale Kompensationssignal (DAT2) den ersten digitalen Symboltakt aufweist;
wobei der zweite Kompensationszweig (160X, 180, 200) eine zweite Neuabtastvorrichtung (200) zum Neuabtasten des zweiten digitalen Kompensationssignals (DAT2) auf der Basis des zweiten digitalen Symboltakts und einen zweiten Verknüpfer (180) zum Verknüpfen des abgetasteten zweiten Empfangssignals (10B, 20B) mit dem neu abgetasteten zweiten digitalen Kompensationssignal (DAT2) umfasst.

12. Empfängereinrichtung nach Anspruch 11,
wobei die zweite Neuabtastvorrichtung (200) so konfiguriert ist, dass sie sowohl auf der Basis des ersten digitalen Symboltakts als auch des zweiten digitalen Symboltakts arbeitet.

13. Empfängereinrichtung nach einem der Ansprüche 9 bis 12,
wobei die Empfängereinrichtung Mittel umfasst, die so konfiguriert sind, dass sie das Verfahren nach einem der Ansprüche 2 bis 8 ausführen.

## Revendications

1. Procédé pour recevoir des données, comprenant :
réception d'un premier signal de réception (10A, 20A) dans un premier domaine d'horloge, le premier signal de réception ayant un premier rythme de symboles numériques ;
échantillonnage du premier signal de réception (10A, 20A) sur la base dudit premier rythme de symboles numériques ;
réception d'un premier signal de compensation numérique (DAT1) d'un second domaine d'horloge, le premier signal de compensation numérique (DAT1) ayant un second rythme de symboles numériques ;
ré-échantillonnage du premier signal de compensation (DAT1) sur la base dudit premier rythme de symboles numériques, dans lequel ledit ré-échantillonnage du premier signal de compensation (DAT1) comprend :
mise en mémoire tampon du premier signal de compensation numérique (DAT1) sur la base d'un premier signal d'horloge externe (CLK') reçu du second domaine d'horloge ;
réception d'un premier signal de maintien externe (CH') du second domaine d'horloge, le premier signal de maintien externe (CH') indiquant des positions de symboles de données valides dans le premier signal de compensation numérique (DAT1), dans lequel ladite mise en mémoire tampon du premier signal de compensation numérique (DAT1) est accomplie lorsque le premier signal de maintien externe (CH') indique un symbole de données valide dans le premier signal de compensation numérique (DAT1) ;
sortie du premier signal de compensation numérique (DAT1) mis en mémoire tampon sur la base d'un premier signal d'horloge local (CLK) du premier domaine d'horloge,
et combinaison du premier signal de réception (10A, 20A) échantillonné avec le premier signal de compensation numérique (DAT1) ré-échantillonné.

2. Procédé selon la revendication 1,
dans lequel ledit ré-échantillonnage du premier signal de compensation numérique (DAT1) comprend en outre génération d'un premier signal de maintien intermédiaire (CHi) sur la base du premier signal de maintien externe (CH'), du premier signal d'horloge local (CLK) et du premier signal d'horloge externe (CLK'), le premier signal de maintien intermédiaire (CHi) indiquant quand il faut faire sortir un symbole de données dans le premier signal de compensation numérique (DAT1) mis en mémoire tampon, et
dans lequel ladite sortie du premier signal de compensation numérique (DAT1) mis en mémoire tampon comprenant sortie d'un symbole de données sur la base du premier signal d'horloge local (CLK) lorsque le premier signal de maintien intermédiaire (CHi) indique qu'il faut faire sortir un symbole de données.

3. Procédé selon la revendication 2,
dans lequel ledit ré-échantillonnage du premier signal de compensation numérique (DAT1) comprend en outre :
réception d'un premier signal de maintien local (CH) indiquant des positions de symboles de données valides dans le premier signal de réception (10A, 20A) échantillonné ; et
interpolation du premier signal de compensation numérique (DAT1) mis en mémoire tampon sur la base du premier signal d'horloge local (CLK), du premier signal de maintien intermédiaire (CHi) et du premier signal de maintien local (CH).

4. Procédé selon l'une quelconque des revendications précédentes, comprenant :
réception d'un second signal de réception (10B, 20B) dans le second domaine d'horloge, le second signal de réception ayant ledit second rythme de symboles numériques ;
échantillonnage du second signal de réception (10B, 20B) sur la base dudit second rythme de symboles numériques ;
réception d'un second signal de compensation numérique (DAT2) du premier domaine d'horloge ;
ré-échantillonnage du second signal de compensation numérique (DAT2) sur la base dudit second rythme de symboles numériques ; et
combinaison du second signal de réception (10B, 20B) échantillonné avec le second signal de compensation numérique (DAT2) ré-échantillonné.

5. Procédé selon la revendication 4,
dans lequel ledit ré-échantillonnage du second signal de compensation numérique (DAT2) comprend :
mise en mémoire tampon du second signal de compensation numérique (DAT2) sur la base d'un second signal d'horloge externe (CLK') reçu du premier domaine d'horloge ;
sortie du second signal de compensation numérique (DAT2) mis en mémoire tampon sur la base d'un second signal d'horloge local (CLK) du second domaine d'horloge.

6. Procédé selon la revendication 5,
dans lequel ledit ré-échantillonnage du second signal de compensation numérique (DAT2) comprend en outre réception d'un second signal de maintien externe (CH') indiquant des positions de symboles de données valides dans le second signal de compensation numérique (DAT2), et
dans lequel ladite mise en mémoire tampon du second signal de compensation numérique (DAT2) est accomplie lorsque le second signal de maintien externe (CH') indique un symbole de données valide dans le second signal de compensation numérique (DAT2).

7. Procédé selon la revendication 6,
dans lequel ledit ré-échantillonnage du second signal de compensation numérique (DAT2) comprend en outre génération d'un second signal de maintien intermédiaire (CHi) sur la base du second signal de maintien externe (CH'), du second signal d'horloge local (CLK), et du second signal d'horloge externe (CLK'), le second signal de maintien intermédiaire (CHi) indiquant quand il faut faire sortir un symbole de données dans le second signal de compensation numérique (DAT2) mis en mémoire tampon, et
dans lequel ladite sortie du second signal de compensation numérique (DAT2) mis en mémoire tampon comprend sortie d'un symbole de données sur la base du second signal d'horloge local (CLK) lorsque le second signal de maintien intermédiaire (CHi) indique qu'il faut faire sortir un symbole de données.

8. Procédé selon la revendication 7,
dans lequel ledit ré-échantillonnage du second signal de compensation numérique (DAT2) comprend en outre :
réception d'un second signal de maintien local (CH) indiquant des positions de symboles de données valides dans le second signal de réception (10B, 20B) échantillonné ; et
interpolation du second signal de compensation numérique (DAT2) mis en mémoire tampon sur la base du second signal d'horloge local (CLK), du second signal de maintien intermédiaire (CHi), et du second signal de maintien local (CH).

9. Equipement de récepteur, comprenant :
une première branche de réception (100A) pour recevoir un premier signal de réception dans un premier domaine d'horloge, le premier signal de réception ayant un premier rythme de symboles numériques ;
un premier étage d'échantillonnage (120) pour échantillonner le premier signal de réception sur la base du premier rythme de symboles numériques ; et une première branche de compensation (160X, 180, 200) fonctionnant sur la base d'un premier signal de compensation numérique (DAT1) reçu d'un second domaine d'horloge, le premier signal de compensation numérique (DAT1) ayant un second rythme de symboles numériques ;
dans lequel la branche de compensation (160X, 180, 200) comprend un premier dispositif de ré-échantillonnage (200) pour ré-échantillonner le premier signal de compensation numérique (DAT1) sur la base du premier rythme de symboles numériques, dans lequel ledit premier dispositif de ré-échantillonnage (200) comprend en outre pour ledit ré-échantillonnage du premier signal de compensation (DAT1) :
des moyens (220) pour la mise en mémoire tampon du premier signal de compensation numérique (DAT1) sur la base d'un premier signal d'horloge externe (CLK') reçu du second domaine d'horloge ;
dans lequel les moyens (220) sont adaptés pour recevoir un premier signal de maintien externe (CH') du second domaine d'horloge, le premier signal de maintien externe (CH') indiquant des positions de symboles de données valides dans le premier signal de compensation numérique (DAT1) ;
dans lequel les moyens (220) sont adaptés pour accomplir ladite mise en mémoire tampon du premier signal de compensation numérique (DAT1) lorsque le premier signal de maintien externe (CH') indique un symbole de données valide dans le premier signal de compensation numérique (DAT1) ; et
dans lequel les moyens (220) sont adaptés pour faire sortir le premier signal de compensation numérique (DAT1) mis en mémoire tampon sur la base d'un premier signal d'horloge local (CLK) du premier domaine d'horloge ; et
un premier combineur (180) pour combiner le premier signal de réception (10A, 20A) échantillonné avec le premier signal de compensation numérique (DAT1) ré-échantillonné.

10. Equipement de récepteur selon la revendication 9,
dans lequel le premier dispositif de ré-échantillonnage (200) est configuré pour fonctionner sur la base du premier rythme de symboles numériques tout comme du second rythme de symboles numériques.

11. Equipement de récepteur selon la revendication 9 ou 10, comprenant :
une seconde branche de réception (100B) pour recevoir un second signal de réception (10B, 20B) dans le second domaine d'horloge, le second signal de réception (10B, 20B) ayant ledit second rythme de symboles numériques ; et
une seconde branche de compensation (160X, 180, 200) fonctionnant sur la base d'un second signal de compensation numérique (DAT2) reçu du premier domaine d'horloge, le second signal de compensation numérique (DAT2) ayant ledit premier rythme de symboles numériques ;
dans lequel la seconde branche de compensation (160X, 180, 200) comprend un second dispositif de ré-échantillonnage (200) pour ré-échantillonner le second signal de compensation numérique (DAT2) sur la base dudit second rythme de symboles numériques, et un second combineur (180) pour combiner le second signal de réception (10B, 20B) échantillonné avec le second signal de compensation numérique (DAT2) ré-échantillonné.

12. Equipement de récepteur selon la revendication 11, dans lequel le second dispositif de ré-échantillonnage (200) est configuré pour fonctionner sur la base du premier rythme de symboles numériques tout comme du second rythme de symboles numériques.

13. Equipement de récepteur selon l'une quelconque des revendications 9 à 12, dans lequel l'équipement de récepteur comprend des moyens configurés pour mettre en oeuvre le procédé selon l'une quelconque des revendications 2 à 8.
